Europäisches Patentamt

European Patent Office

Office européen des brevets

(19)

(11) Numéro de publication: **0 021 961**
**A1**

(12)

# DEMANDE DE BREVET EUROPEEN

(21) Numéro de dépôt: **80400858.9**

(22) Date de dépôt: **13.06.80**

(51) Int. Cl.³: **A 01 G 27/00**

(30) Priorité: **15.06.79 FR 7915343**

(43) Date de publication de la demande:
**07.01.81 Bulletin 81/1**

(84) Etats Contractants Désignés:
**AT BE CH DE GB IT LI LU NL SE**

(71) Demandeur: **TECHNIFLORE**
**5bis rue d'Ablon**
**F-91200 Athis-Mons, Essonne(FR)**

(72) Inventeur: **See, Jacques Léon Alexandre**
**16 A. rue Jean Mermoz**
**Deauville, Calvados(FR)**

(74) Mandataire: **Lepeudry-Gautherat, Thérèse et al,**
**Cabinet Armengaud Jeune Casanova, Akerman,**
**Lepeudry**
**23 boulevard de Strasbourg F-75010 Paris(FR)**

(54) **Dispositif irrigateur autonome pour plantes.**

(57) Le dispositif comprend un réservoir 1 au-dessus duquel est placée une nappe 6 d'un matériau apte à la capillarité. Deux tubes 2 et 3 débouchent dans le réservoir 1 par des trous 4 et 5.

Cet ensemble est autonome et peut être placé dans n'importe quel récipient A dès lors que les tubes 2 et 3 débouchent au-dessus de la terre B.

Fig.2

EP 0 021 961 A1

Dispositif irrigateur autonome pour plantes.

On connaît, depuis fort longtemps, des bacs conçus spécialement pour comprendre un double fond constituant un réservoir d'eau qui communique avec la partie supérieure du bac au moyen d'un conduit latéral.

La terre se trouve au-dessus du premier fond, lequel est constitué par une nappe maintenue tendue et dont les extrémités trempent dans l'eau du réservoir.

Ces bacs présentent l'inconvénient de devoir être construits spécialement ce qui impose des dimensions et une esthétique immuables.

En outre, le bac entier est détérioré et doit être changé lorsque, par exemple, une fissure se produit dans le conduit d'eau inamovible.

Un autre inconvénient encore de ces bacs provient du fait que toute la surface inférieure est constituée par la nappe de sorte que les racines se heurtent à un obstacle au cours de leur développement. Il arrive que certaines racines parviennent à s'insérer entre les bords du bac proprement dit et les bords de la pièce généralement en forme de grille qui maintient la nappe, ceci posant des problèmes délicats lorsqu'il faut dépoter la plante pour la mettre dans un bac de dimensions plus grandes.

Enfin, la présence de la nappe sur toute la surface du bac rend très difficile la présense de tuteurs que l'on doit obligatoirement enfoncer dans la terre et la profondeur de la terre est d'autant plus faible que le réservoir inférieur est grand. Le tuteur qui, ainsi, ne peut être enfoncé que sur une très petite profondeur n'a aucune efficacité pour le maintien de la plante puisque celle-ci parvient sans aucune difficulté à l'incliner puis à le faire tomber.

La présente invention remédie à l'ensemble des inconvénients rappelés ci-dessus et procure de nouveaux avantages marqués tant à l'égard de la facilité d'emploi que du prix de revient d'un dispositif irrigateur.

En se reportant au dessin, on voit qu'un dispositif irrigateur conforme à l'invention, comprend, d'une part, un réservoir au-dessus duquel est placé une nappe d'un matériau apte à la capillarité et dont une partie au moins des bords pend dans le réservoir et, d'autre part, au moins un conduit qui débouche à l'intérieur du réservoir et qui s'étend jusqu'à un niveau supérieur à celui de la nappe, ce dispositif constituant un ensemble autonome destiné à être placé dans un récipient quelconque devant contenir de la terre pour une ou plusieurs plantes, le conduit devant être entouré de terre et déboucher au-dessus de celle-ci, alors que le reste du dispositif est enterré.

L'invention sera bien comprise par la description détaillée ci-après faite en référence au dessin annexé. Bien entendu la description et le dessin ne sont donnés qu'à titre indicatif et non limitatif.

La figure 1 est une vue schématique montrant les différentes pièces qui composent un dispositif conforme à l'invention.

La figure 2 est une vue schématique en coupe partielle montrant la mise en place d'un dispositif irrigateur conforme à l'invention dans un récipient quelconque ainsi que le comportement d'une plante.

La figure 3 est une vue schématique partielle montrant un détail de l'invention.

La figure 4 est une vue schématique montrant un mode de réalisation particulier de l'invention.

La figure 5 est une vue schématique montrant le comportement des racines d'une plante avec un dispositif conforme à ce deuxième mode de réalisation de l'invention.

3

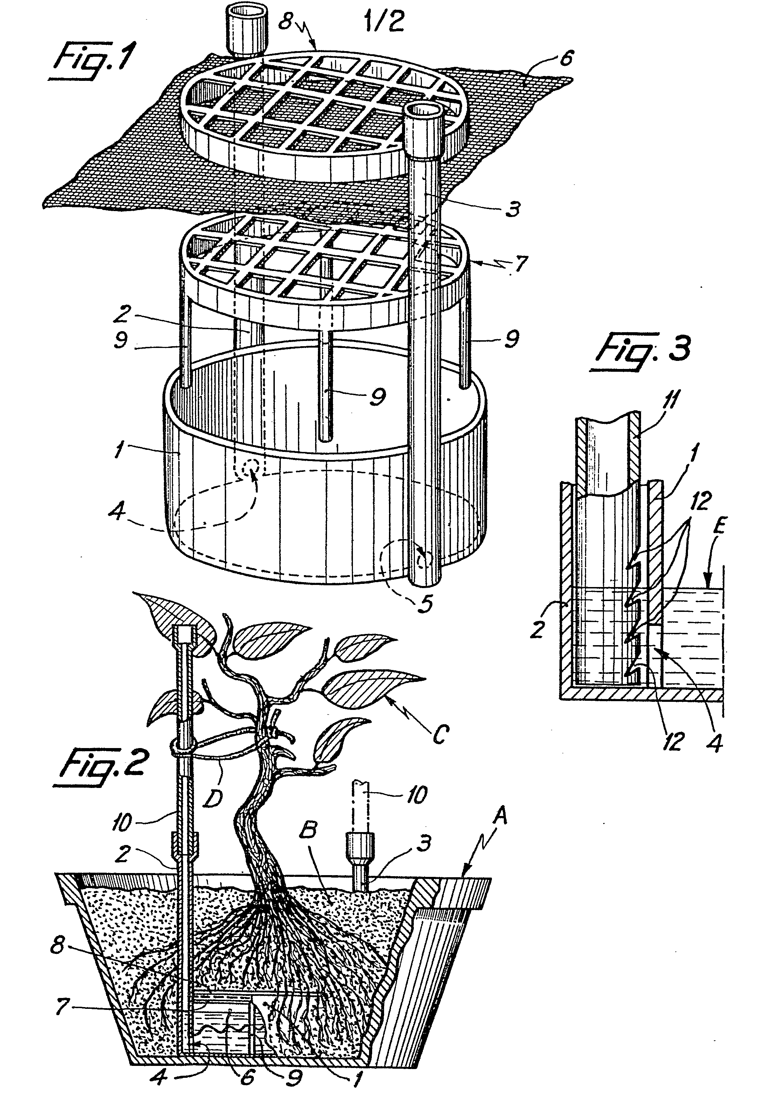

Sur la figure 1, on voit que le réservoir 1 est étanche et ouvert à sa partie supérieure. Il est solidaire de deux conduits diamétralement opposés 2 et 3 qui sont formés par des tubes d'une hauteur substantielle, les parois verticales du réservoir 1 étant percées de trous radiaux 4 et 5 aboutissant à l'intérieur des tubes 2 et 3 afin que ceux-ci communiquent avec l'intérieur du réservoir.

Par ailleurs, le dispositif conforme à l'invention comprend une nappe 6 en matériau apte à la capillarité et imputrescible qui doit être maintenue au-dessus du réservoir 1.

Pour cela, la nappe 6 est placée entre deux grilles respectivement 7 et 8 comprenant des rebords verticaux qui ont un diamètre tel que la grille 8 peut s'emboîter sur la grille 7 à la manière d'un couvercle sur une boîte et, cela, en emprisonnant la nappe 6. Cet ensemble a ainsi une constitution qui rappelle celle d'un tambour à broderie grâce auquel l'ouvrage est maintenu tendu et a des bords qui dépassent largement le périmètre du tambour, la différence essentielle, ici résidant dans le fait que la grille supérieure 8 présente un réseau parallèle à la partie tendue de la nappe 6.

La grille 7, quant à elle, est munie de pieds 9 perpendiculaires au fond du réservoir 1.

Lorsque l'ensemble du dispositif qui vient d'être décrit est monté, la nappe 6 maintenue tendue entre les deux grilles 7 et 8, se trouve à la partie supérieure du réservoir 1 du fait que les pieds 9 ont une hauteur calculée en conséquence pour donner à la nappe 6 le niveau voulu lorsque ces pieds 9 reposent sur le fond du réservoir 1, les dimensions de la nappe 6 étant telles que ses bords pendent à l'intérieur du réservoir 1 jusqu'à un niveau auquel doit se trouver de l'eau d'irrigation.

Sur la figure 2, on voit un dispositif de la figure 1 complètement monté et mis en place dans un récipient quelconque A.

On prend soin de placer dans le récipient A de la terre B jusqu'à niveau supérieur tel que les tubes 2 et 3 dépassent au-dessus de la terre.

On voit, avec ces dispositions, que le récipient A quelconque peut être choisi en fonction de l'esthétique désirée quelle qu'elle soit puisque l'on peut même utiliser des objets de style et que l'on dispose d'un dispositif irrigateur facilement utilisable en introduisant de l'eau soit par le tube 2 soit par le tube 3.

On remarque sur la figure 2 que le dispositif est sensiblement plus petit que le récipient A ce qui permet aux racines de la plante C de s'étendre autour du dispositif lui-même en disposant, par conséquent, de beaucoup plus de place que si la totalité de la surface du récipient A était équipée d'un réservoir dans un double fond.

On note que la présence de deux tubes opposés 2 et 3 permet à l'air du réservoir 1 de s'échapper par l'un des deux conduits lorsque l'on introduit de l'eau par l'autre.

Le dispositif selon l'invention est donc complètement enterré et a une stabilité absolue par rapport au récipient A dans lequel il est placé.

Il pourrait se faire que l'on désire placer un dispositif conforme à l'invention dans un récipient assez haut de sorte qu'en posant le dispositif sur le fond du récipient la terre doit se situer à un niveau supérieur à celui de l'embouchure des conduits 2 et 3.

Dans ce cas, on peut poser le dispositif non plus sur le fond du récipient mais sur une couche de terre placée dans le fond afin de remonter le niveau du dispositif et faire en sorte que les tubes 2 et 3 soient bien à l'extérieur de la terre.

Cependant cette manière de procéder n'est pas excellente pour la bonne irrigation de l'ensemble de la terre.

Une autre solution consiste à placer sur les tubes 2 et 3 une rallonge creuse.

On peut ainsi, segment par segment, obtenir n'importe quelle hauteur de conduit pour adapter le dispositif à toute espèce de récipients aussi fantaisistes soient-ils.

La manière de placer les rallonges les unes sur les autres est tout à fait simple et peut s'inspirer, par exemple, des tuyaux de descente qui comprennent une sorte de tulipe élargie dans laquelle l'extrémité de diamètre normal d'un autre segment est engagée.

Ceci est particulièrement facile à obtenir par moulage et/ou extrusion de matière synthétique.

On voit, sur la figure 2, que le récipient A comprend une hauteur de terre relativement faible puisque les tubes 2 et 3 dépassent non seulement la terre mais également le bord du récipient A.

Pourtant on remarque que le tube 2 est muni d'une rallonge 10.

Cela illustre une caractéristique intéressante de l'invention selon laquelle chaque tube peut constituer le support d'un tuteur pour la plante C et l'on voit, en effet, que la plante C est attachée à la rallonge 10 par un lien D de tout type connu.

Cette disposition présente de nombreux avantages :

- il est possible d'utiliser un tuteur malgré la présence d'un dispositif irrigateur puisque le support de ce tuteur est solidaire du dispositif irrigateur et dépasse la surface de la terre de sorte qu'on le voit facilement et que l'on ne peut en aucun cas détériorer le dispositif.

- La stabilité du tuteur est parfaite puisqu'elle est fonction de celle du dispositif, laquelle comme expliqué plus haut, n'est pas inférieure à la stabilité du récipient lui-même.

- La base du tuteur est très proche du tronc de la plante ce qui serait impossible si on engageait un tuteur dans le conduit des bacs connus actuellement car ces conduits sont complètement excentrés.

- Les rallonges pouvant recevoir plusieurs segments successifs il en résulte que le tuteur qu'ils constituent "grandit" avec la plante. Cela a pour conséquence heureuse qu'une petite plante n'est pas associée à un grand tuteur disproportionné et prévu dès la plantation ou qu'il n'est pas nécessaire de remplacer le tuteur au fur et à mesure de la croissance de la plante.

- Chacun des segments étant creux prolonge les tubes 2 et 3 et l'on peut remplir le réservoir 1 par le sommet du tuteur ou, en déboîtant l'un des segments, à la hauteur que l'on désire et, par exemple, au niveau le plus près de la terre c'est-à-dire au sommet du tube 2 ou du tube 3.

Sur la figure 3, on a représenté une variante selon laquelle le diamètre intérieur du tube 2 et le diamètre extérieur d'une rallonge 11 sont tels que cette rallonge 11 pénètre à l'intérieur du tube 2 jusqu'au fond c'est-à-dire jusqu'en regard du trou 4 qui fait communiquer le tube 2 avec l'intérieur du réservoir 1.

On voit que le niveau E de l'eau placée dans le réservoir 1 se retrouve à l'intérieur du tube 2 selon le principe des vases communiquants. Ainsi donc la partie inférieure de la rallonge 11 trempe dans l'eau et peut servir de jauge.

Lorsque la matière constitutive de la rallonge 11 s'oppose à la rétention d'eau sur sa surface (ce qui est le cas de certaines matières plastiques), il est bon de prévoir des stries 12 ou des reliefs afin que l'eau puisse, même en quantité infime, rester accrochée à ces stries ou à ces reliefs.

Avec ces dispositions, il suffit de retirer la rallonge 11 hors du tube 2 pour vérifier le niveau d'eau dans le réservoir 1.

Ceci n'est pas un inconvénient lorsque la rallonge 11 joue en même temps le rôle de tuteur car il est toujours possible de faire glisser un tuteur parallèlement à son axe sans pour autant nuire à la plante, surtout que ce déplacement vertical peut se faire sur une distance très courte qui est celle de la hauteur du tube 2 ou du tube 3.

On note qu'un dispositif irrigateur conforme à l'invention étant autonome, il peut s'adapter, comme dit plus haut, à un récipient quelconque mais on peut également prévoir plusieurs dispositifs irrigateurs pour un seul et même récipient lorsque ses dimensions sont importantes.

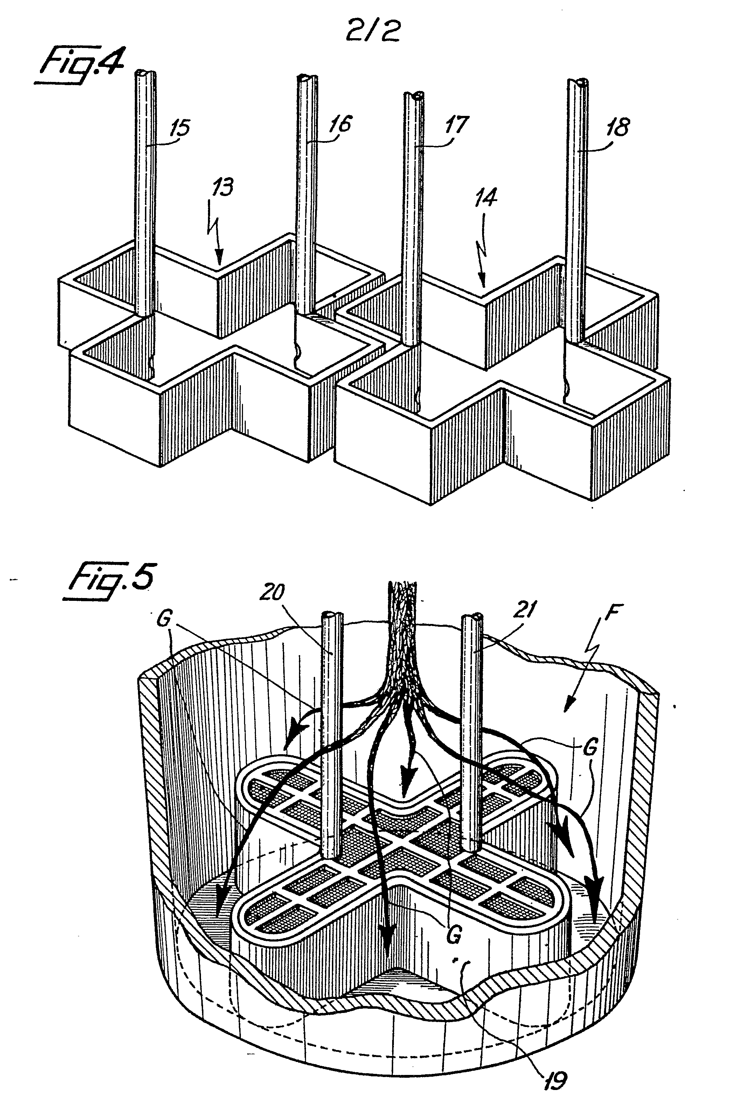

Les figures 4 et 5 illustrent une variante selon laquelle le dispositif, au lieu d'avoir une configuration générale cylindrique comme dans le cas des figures 1 et 2, a une configuration générale cruciforme.

On voit sur la figure 4 deux dispositifs irrigateurs conformes à l'invention qui sont cruciformes et, pour la clarté du dessin, on n'a représenté que les réservoirs 13 et 14 et les tubes 15 à 18 dont ils sont solidaires.

On voit que la forme cruciforme de ce dispositif permet de les emboîter et de les juxtaposer aisément à l'intérieur d'un récipient donné.

Cette disposition permet, en outre, d'avoir les tubes 15 et 16 d'une part, 17 et 18 d'autre part, plus proches l'un de l'autre que dans le mode de réalisation des figures 1 et 2 et cela à surface horizontale égale.

Les tubes sont ainsi moins visibles lorsque les dispositifs sont en place et sont plus proches du tronc de la plante ce qui assure son maintien parfait.

La vue schématique de la figure 5 représente un dispositif irrigateur conforme à l'invention sous forme cruciforme mais l'on note, qu'ici, les extrémités du réservoir 19 sont arrondies ainsi que les congés de raccordement des branches de la croix alors que sur la figure 4 toutes les lignes étaient rectilignes.

L'intérêt de la figure 5 est de montrer que la forme cruciforme du réservoir 19 est avantageuse même lorsque l'on n'utilise qu'un seul dispositif dans un récipient étroit F. En effet, on voit sur cette figure 5 que le diamètre intérieur du récipient F est sensiblement égal au cercle virtuel circonscrit au réservoir cruciforme 19. Les tubes 20 et 21 sont en position relativement rapprochés comme cela a été expliqué plus haut et l'on a schématisé par des flèches G la direction que les racines de la plante peuvent prendre pour s'étendre jusqu'au fond du récipient F c'est-à-dire entre les tubes 20 et 21 et autour du réservoir 19 dans l'espace qui subsiste entre l'intérieur du récipient F et l'extérieur du réservoir 19, entre les branches de la croix.

On a ainsi une grande surface horizontale supérieure pour l'irrigation de la terre par capillarité, ainsi que cela est connu, tout en bénéficiant de l'avantage de permettre aux racines une extension autour du dispositif irrigateur.

Un récipient, quel qu'il soit, équipé d'au moins un dispositif irrigateur conforme à l'invention présente donc des avantages marqués procurant une plus-value commerciale certaine.

En effet, il est possible à un fleuriste de garnir des récipients appartenant à la clientèle ou bien fournir des récipients de valeur relativement importante tels que des potiches ou vasques anciennes. La liberté totale du choix des récipients permet d'harmoniser l'espèce de la plante avec le décor ou le style du récipient.

Cette facilité est très importante lorsque l'on sait que les pots de fleurs qui sont particulièrement bien adaptés, évidemment, à la vie des plantes doivent toujours avoir un fond percé pour laisser échapper le surplus d'eau provenant de l'arrosage par le dessus de la terre.

Faute de pouvoir disposer d'un système d'irrigation, il est actuellement impossible de garantir une bonne croissance de plantes disposées dans un récipient qui n'est pas percé de trous or le perçage de trous ne peut pas être envisagé avec des poteries anciennes.

Il ressort de la description ci-dessus que l'invention ouvre des voies nouvelles pour la décoration avec des plantes ou des fleurs et rend plus facile l'accès de la clientèle au système d'irrigation connu en lui-même et qui a été rappelé ci-dessus.

Un dispositif irrigateur conforme à l'invention peut être obtenu par moulage de matière synthétique sauf pour ce qui est de la nappe 6 qui doit être apte à la capillarité et peut, par exemple, être formée d'un morceau de toile découpée.

Il est intéressant de souligner que la nappe 6 est avantageusement de forme rectangulaire même lorsque les grilles sont circulaires, carrées ou virtuellement carrées (cas des figures 4 et 5) car il suffit que deux coins de la nappe 6 trempent dans l'eau pour que, par capillarité, l'ensemble de la partie tendue de la nappe soit humide et communique l'eau à la terre située au-dessus de sorte qu'ici encore on peut parvenir à un prix de revient abaissé puisque dans une surface de toile donnée on obtient un plus grand nombre de nappes 6 et que l'on peut, par conséquent, équiper un plus grand nombre de dispositifs.

L'invention n'est pas limitée aux seuls modes de réalisation décrits et représentés mais en embrasse, au contraire, toutes les variantes.

10

## REVENDICATIONS DE BREVET

1. Dispositif irrigateur pour plantes, caractérisé en ce qu'il comprend d'une part un réservoir au-dessus duquel est placée une nappe d'un matériau apte à la capillarité et dont une partie, au moins, des bords pend dans le réservoir et, d'autre part au moins un conduit qui débouche à l'intérieur du réservoir et qui s'étend jusqu'à un niveau supérieur à celui de la nappe, ce dispositif constituant un ensemble autonome destiné à être placé dans un récipient quelconque devant contenir de la terre pour une ou plusieurs plantes, le conduit devant être entouré de terre et déboucher au-dessus de celle-ci alors que le reste du dispositif est enterré.

2. Dispositif selon la revendication 1, caractérisé en ce que le réservoir est relié à au moins deux conduits opposés, l'un devant constituer une entrée pour l'introduction d'eau dans le réservoir et l'autre devant, corrélativement, constituer une sortie d'air.

3. Dispositif selon la revendication 1, caractérisé en ce que le conduit est susceptible de recevoir au moins une rallonge creuse pouvant, en outre, constituer un tuteur.

4. Dispositif selon la revendication 1, caractérisé en ce que la nappe est emprisonnée entre deux grilles et en ce que la grille inférieure est munie de pieds devant reposer sur le fond du réservoir.

5. Dispositif selon l'une quelconque des revendications 1 à 4 ci-dessus, caractérisé en ce que l'ensemble a une configuration cruciforme.

6. Récipient, éventuellement garni de terre et d'au moins une plante, selon l'une quelconque des revendications 1 à 5 ci-dessus.

Fig.1

Fig.2

Fig.3

0021961

1/2

Fig.4

15    16    17    18

13    14

Fig.5

20    21    F

G    G

G

19

**Office européen
des brevets**

**RAPPORT DE RECHERCHE EUROPEENNE**

Numéro de la demande

EP 80 40 0858

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - A - 1 468 863 (MAGNENAT) <br> * Page 1, colonne de gauche, 7ème paragraphe - page 1, colonne de droite, 1er paragraphe; figures 1,2 * <br><br> -- | 1 | A 01 G 27/00 |
| | CH - A - 307 234 (BLOCHLINGER) <br> * Totalité du brevet * <br><br> -- | 1 | |
| | FR - A - 1 544 194 (RAJON) <br> * Totalité du brevet * <br><br> -- | 1 | **DOMAINES TECHNIQUES RECHERCHES (Int. Cl. 3)** |
| | US - A - 2 809 468 (ELIOT) <br> * Totalité du brevet * <br><br> ---- | 3 | A 01 G 27/00 <br> 9/02 |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-09-1980 | HERYGERS |

OEB Form 1503.1   06.78